(19) Europäisches Patentamt
European Patent Office
Office européen des brevets

(11) **EP 3 889 489 B1**

(12) **EUROPEAN PATENT SPECIFICATION**

(45) Date of publication and mention
of the grant of the patent:
**16.07.2025 Bulletin 2025/29**

(21) Application number: **20205439.1**

(22) Date of filing: **03.11.2020**

(51) International Patent Classification (IPC):
**F17C 5/06** (2006.01)

(52) Cooperative Patent Classification (CPC):
**F17C 5/06;** F17C 2201/056; F17C 2221/012;
F17C 2223/0123; F17C 2225/036; F17C 2227/04;
F17C 2250/032; F17C 2250/034; F17C 2250/043;
F17C 2250/0439; F17C 2250/0443;
F17C 2250/0491; F17C 2250/0636; F17C 2260/02;
F17C 2260/021; (Cont.)

(54) **HYDROGEN FUELING SYSTEM AND METHOD BASED ON REAL-TIME COMMUNICATION INFORMATION FROM CHSS FOR FUEL CELL**

WASSERSTOFFBETANKUNGSSYSTEM UND -VERFAHREN AUF BASIS VON ECHTZEITKOMMUNIKATIONSINFORMATIONEN VON CHSS FÜR BRENNSTOFFZELLE

SYSTÈME D'ALIMENTATION EN HYDROGÈNE ET PROCÉDÉ BASÉ SUR DES INFORMATIONS DE COMMUNICATION EN TEMPS RÉEL D'INFORMATIONS À PARTIR D'UN SYSTÈME DE STOCKAGE-COMPRESSION D'HYDROGÈNE POUR PILE À COMBUSTIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2020 KR 20200039619**
**19.05.2020 KR 20200059889**

(43) Date of publication of application:
**06.10.2021 Bulletin 2021/40**

(73) Proprietor: **Mirae EHS-code Research Institute Seoul 08390 (KR)**

(72) Inventor: **CHAE, Chung Keun**
**07225 Seoul (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(56) References cited:
**US-A1- 2008 000 542     US-A1- 2018 356 270**
**US-A1- 2019 301 678     US-B2- 9 279 541**
**US-B2- 9 605 804**

(52)  Cooperative Patent Classification (CPC): (Cont.)
F17C 2260/023; F17C 2265/065; F17C 2270/0139;
F17C 2270/0178; F17C 2270/0184

**Description**

## TECHNICAL FIELD

Embodiments of the disclosure relate to a hydrogen fueling system and method based on real-time communication information from a CHSS for fuel cells and a protocol capable of quickly filling hydrogen tanks with hydrogen by measuring the temperature and pressure of the hydrogen tanks in real-time.

## DESCRIPTION OF RELATED ART

A hydrogen vehicle is a vehicle that uses hydrogen fuel for motive power and converts the chemical energy of hydrogen to mechanical energy either by burning hydrogen in an internal combustion engine. Hydrogen, as a fuel for hydrogen vehicles, has the nature of quick fueling at a high pressure and has a risk as compared with use of fossil fuels and its full fueling is not easy due to the Joule-Thomson effect. Many countries have developed hydrogen fueling protocols and some of them use a lookup table regarding the pressure ramp rate and the target pressure based on parameters upon fueling. However, such conventional art does not perform fueling control based on measurements obtained in real-time and suffers from the need for creating of a complicated filling or fueling program based on numerous lookup tables and myriad conditions under the condition that various mobility devices, such as drones, boats, or forklifts, as well as vehicles, are being developed, and may thus not be adopted unless some conditions are met, failing to provide accurate fueling and control.

U.S. Patent Application Publication No. 2014-0311622 published on October 23, 2014 and Korean Patent Application Publication No. 2013-0061268 published on June 11, 2013 disclose a configuration of measuring, in real-time, the difference between the target temperature and sensing temperature upon filling a compressed hydrogen storage tank with hydrogen from a dispenser and controlling the filling flow of hydrogen to allow the sensing temperature to reach the target temperature and a method of measuring, in real-time, the degree of deformation in a compressed hydrogen storage tank and stopping hydrogen fueling upon detecting a preset degree of deformation.

However, the protocols disclosed in the prior art documents are not control protocols developed under the assumption of real-time communication, ending up turning back to the original issue that real-time hydrogen control is impossible. The reason why the protocols have been complicated comes from the incapability of communication or unreliable communication between the hydrogen refueling station and the vehicle. Thus, a need exists for research and development of a standardized protocol ensuring communication capable all the time and the reliability of communication. Reliable communication allows the temperature and pressure, which are major risk factors for use of hydrogen as a fuel, to be monitored and predicted in real-time while calculating the pressure ramp rate and target pressure, thereby contributing to creation of a simplified protocol. Therefore, a robust communication protocol and a controlling method for real-time monitoring are needed.

US 2018/356270 A1 discloses systems and techniques for hydrogen fueling with integrity checks. In the document it is described that communicated parameters measured by on-board sensors of a vehicle may be cross-referenced against calculated parameters measured by sensors of a fueling station, the communicated parameters relating to a compressed hydrogen storage system (CHSS) tank of a vehicle to be fueled may be received at different time intervals, the calculated parameters may be calculated based on a mass of hydrogen fuel dispensed by a hydrogen fueling station from a reference point to one of the time intervals and densities of the CHSS tank of the vehicle at respective time intervals, an error may be calculated between the communicated parameters and the calculated parameters, and a fueling mode, such as a conservative fueling mode or a non-conservative fueling mode, may be determined based on the calculated error.

## SUMMARY

The invention is defined by the appended claims.

According to various embodiments, in order to fill hydrogen tanks with hydrogen more safely and quickly based on the structural information and thermodynamic information about the hydrogen tanks sent from the CHSS via wireless communication while filling the hydrogen tanks with hydrogen, the pressure and temperature of hydrogen inside the hydrogen tanks may be measured in real-time, and the dispenser may receive the pressure and temperature, which have been measured in real-time, from the CHSS via wireless communication, calculate the optimal pressure ramp rate, and allows hydrogen fueling to be performed at the optimal pressure ramp rate, thereby minimizing the fueling time within a range in which the hydrogen pressure, temperature, and state of charge (SOC) inside the hydrogen tank do not exceed preset thresholds.

## BRIEF DESCRIPTION OF THE DRAWINGS

A more complete appreciation of the present disclosure and many of the attendant aspects thereof will be readily obtained as the same becomes better understood by reference to the following detailed description when considered in connection with the accompanying drawings, wherein:

Fig. 1 is a view illustrating a hydrogen safe fueling system based on real-time communication information from a CHSS for fuel cells according to an embodiment;
Fig. 2 is a block diagram illustrating an internal configuration of a system as shown in Fig. 1;
Fig. 3 is a flowchart illustrating a method of fueling by a dispenser controller of a hydrogen safe fueling system based on real-time communication information from a CHSS for fuel cells according to an embodiment; and
Fig. 4 is a flowchart illustrating a method of driving the simple thermodynamic model of Fig. 3, according to an embodiment.

## DETAILED DESCRIPTION OF EXEMPLARY EMBODIMENTS

Hereinafter, exemplary embodiments of the inventive concept will be described in detail with reference to the accompanying drawings. The inventive concept, however, may be modified in various different ways, and should not be construed as limited to the embodiments set forth herein. Like reference denotations may be used to refer to the same or similar elements throughout the specification and the drawings. However, the present disclosure may be implemented in other various forms and is not limited to the embodiments set forth herein. For clarity of the disclosure, irrelevant parts are removed from the drawings, and similar reference denotations are used to refer to similar elements throughout the specification.

In embodiments of the present disclosure, when an element is "connected" with another element, the element may be "directly connected" with the other element, or the element may be "electrically connected" with the other element via an intervening element. When an element "comprises" or "includes" another element, the element may further include, but rather than excluding, the other element, and the terms "comprise" and "include" should be appreciated as not excluding the possibility of presence or adding one or more features, numbers, steps, operations, elements, parts, or combinations thereof.

When the measurement of an element is modified by the term "about" or "substantially," if a production or material tolerance is provided for the element, the term "about" or "substantially" is used to indicate that the element has the same or a close value to the measurement and is used for a better understanding of the present disclosure or for preventing any unscrupulous infringement of the disclosure where the exact or absolute numbers are mentioned. As used herein, "step of" A or "step A-ing" does not necessarily mean that the step is one for A.

As used herein, the term "part" may mean a unit or device implemented in hardware, software, or a combination thereof. One unit may be implemented with two or more hardware devices or components, or two or more units may be implemented in a single hardware device or component. However, the components are not limited as software or hardware but may rather be configured to be stored in a storage medium or to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. A function provided in an element or a 'unit' may be combined with additional elements or may be split into sub elements or sub units. Further, an element or a 'unit' may be implemented to process one or more CPUs in a device or a security multimedia card.

As used herein, some of the operations or functions described to be performed by a terminal or device may be, instead of the terminal or device, performed by a server connected with the terminal or device. Likewise, some of the operations or functions described to be performed by a server may be performed by a terminal or device connected with the server, instead of the server.

As used herein, some of the operations or functions described to be mapped or matched with a terminal may be interpreted as mapping or matching the unique number of the terminal, which is identification information about the terminal, or personal identification information.

Hereinafter, embodiments of the disclosure are described in detail with reference to the accompanying drawings.

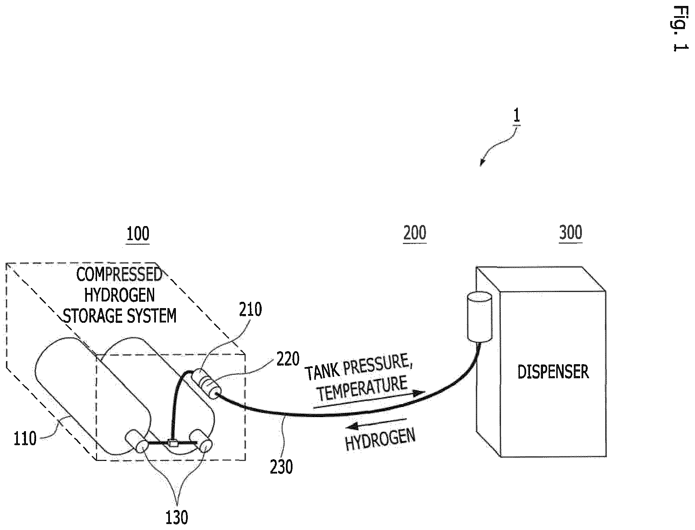

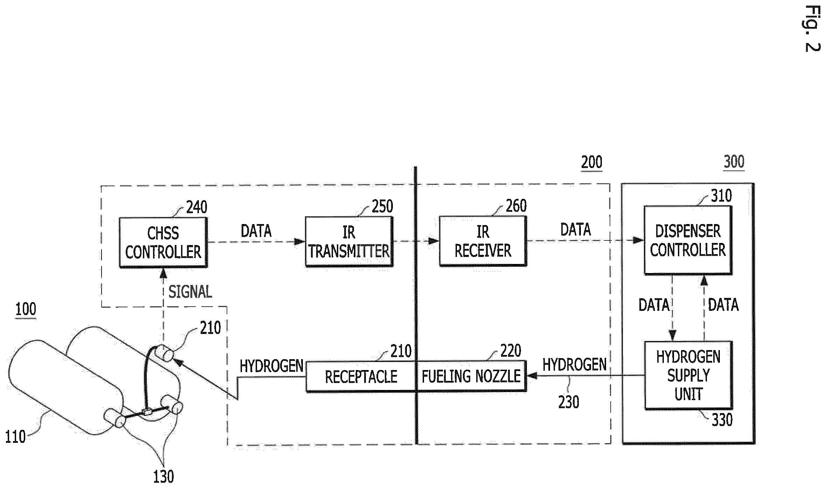

Fig. 1 is a view illustrating a hydrogen safe fueling system based on real-time communication information from a compressed hydrogen storage system (CHSS) for fuel cells according to an embodiment. Fig. 2 is a block diagram illustrating an internal configuration of a system as shown in Fig. 1.

Referring to Fig. 1, a hydrogen safe fueling system 1 based on real-time communication information from a CHSS for fuel cells may include at least one compressed hydrogen storage system (CHSS) 100, a data hydrogen moving device 200, and a dispenser 300. However, the hydrogen safe fueling system 1 is merely an example, and the scope of the present disclosure is not limited by Fig. 1.

The components of the system 1 of Fig. 1 are connected together via a network 200. For example, as shown in Fig. 1, the at least one CHSS 100 may be connected with the data hydrogen moving device 200 via a network. The data hydrogen moving device 200 may be connected with the at least one CHSS 100 and the dispenser 300 via the network. The dispenser 300 may be connected with the data hydrogen moving device 200 via the network.

Here, the network means a connection structure capable of exchanging information between nodes, such as a plurality of terminals or servers, and examples of the network include local area networks (LANs), wide area networks (WANs), internet (world wide web (WWW)), wired/wireless data communication networks, telephony networks, or wired/wireless television communication networks. Examples of the wireless data communication networks may include, but are not limited to, 3G, 4G, or 5G networks, 3rd Generation Partnership Project (3GPP) networks, Long Term Evolution (LTE) networks, Long Term Evolution-Advanced (LTE-A) networks, World Interoperability for Microwave Access (WIMAX) networks, Internet, Local Area Networks (LANs), wireless LANs, Wide Area Networks (WANs), Personal Area Networks (PANs), Bluetooth networks, near-field communication (NFC) networks, satellite broadcast networks, analog broadcast networks, and Digital Multimedia Broadcasting (DMB) networks.

As used herein, the singular forms "a," "an," and "the" are intended to include the plural forms as well, unless the context clearly indicates otherwise. According to embodiments, a plurality of components of the same type may be a single component of the type, and one component may add one or more components of the same type.

Each component of Fig. 1 is described below in connection with Fig. 2.

The CHSS 100 may include a hydrogen tank 110 and a hydrogen tank valve 130. The CHSS 100 may include a plurality of hydrogen tanks 100. The CHSS is installed in a hydrogen vehicle and is provided to receive and store hydrogen as a fuel. The hydrogen tank valve 130 includes a pressure sensor and a temperature sensor and measure the pressure and temperature of hydrogen supplied to the hydrogen tank 110 and transfer the measurements to a CHSS controller 240 of the data hydrogen moving device 200.

The data hydrogen moving device 200 may include a receptacle 210 to transfer the hydrogen dispensed from a hydrogen supply unit 330 to the hydrogen tank valve 130, a wireless communication unit provided for communication between the CHSS controller 240 and a dispenser controller 310 in the dispenser 300, and the CHSS controller 240 to convert sensing data into data for wireless communication and output the sensing data. The data hydrogen moving device 200 may further include a fueling nozzle 220 connected between the receptacle 210 and the hydrogen supply unit 330 to supply hydrogen to the hydrogen tank 110 via the hydrogen tank valve 130. The wireless communication unit may include an infrared (IR) transmitter 250 that is connected with the CHSS controller 240 which is installed on one side of the receptacle 210 through which hydrogen is injected to the vehicle and an IR receiver 260 having one end connected with the IR transmitter 250 and the opposite end connected with the dispenser controller 310.

The dispenser 300 may include the dispenser controller 310 to receive sensing data including the temperature and pressure of the hydrogen inside the hydrogen tank 110 and the hydrogen supply unit 330 to supply hydrogen to the hydrogen tank 110 based on the sensing data. The dispenser controller 310 may receive data from the wireless communication unit and the hydrogen supply unit 330, calculate a real-time pressure ramp rate inside the hydrogen supply unit 330, and provide the calculated pressure ramp rate to the hydrogen supply unit 330.

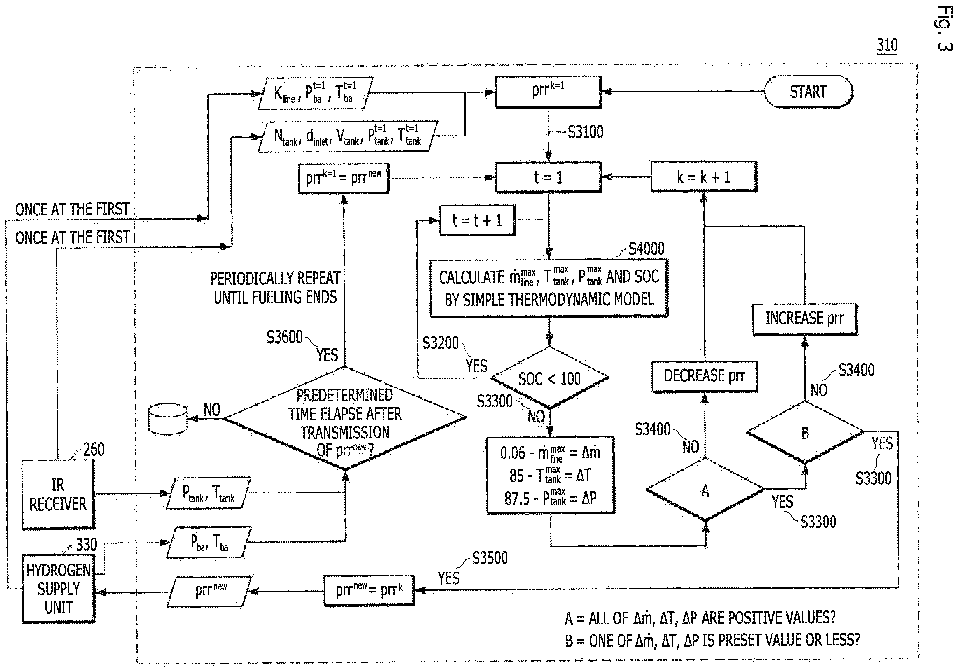

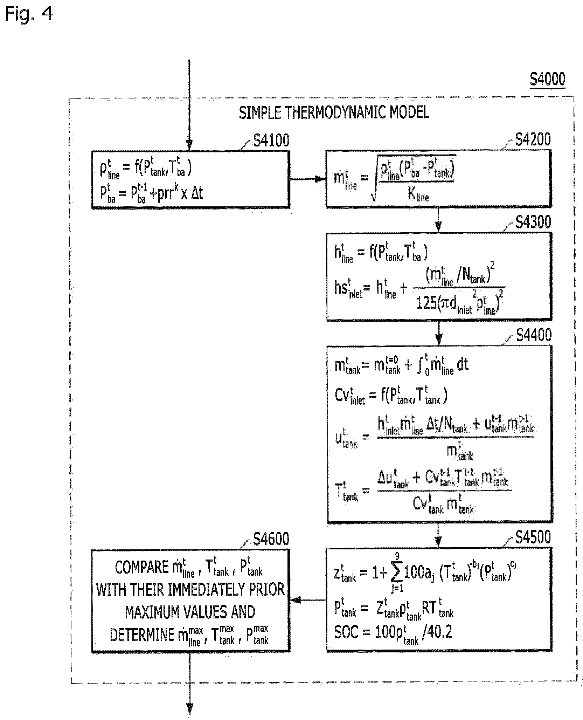

Operations of the CHSS real-time communication information-based hydrogen safe fueling system of Figs. 1 and 2 are described below in detail with reference to Figs. 3 and 4. However, what is described below is merely an example, and embodiments of the disclosure are not limited thereto.

Fig. 3 is a flowchart illustrating a method of fueling by a dispenser controller of a hydrogen safe fueling system based on real-time communication information from a CHSS for fuel cells according to an embodiment. Fig. 4 is a flowchart illustrating a method of driving a simple thermodynamic model of Fig. 3.

Referring to Fig. 3, according to an embodiment, the hydrogen safe fueling system 1 based on real-time communication information from a CHSS for fuel cells enables hydrogen fueling more quickly and safely, based on the structural information and thermodynamic information about the hydrogen tank, which is sent from the CHSS to the dispenser 300 via wireless communication while filling the hydrogen tank with hydrogen. To that end, the CHSS 100 may measure, in real-time, the pressure and temperature inside the hydrogen tank 110, and the dispenser 300 may receive the pressure and temperature from the CHSS 100, calculate the optimal pressure ramp rate, and allow hydrogen fueling to be performed at the calculated optimal pressure ramp rate. Thus, hydrogen fueling time may be minimized within a range in which the pressure, temperature, and filling flow rate of hydrogen in the hydrogen tank 110 do not depart from preset thresholds.

The approximations mentioned in Figs. 3 and 4 may be described with reference to Table 1 below, and no duplicate description is given.

[Table 1]

| prr | Pressure Ramp Rate, MPa/s |
|-----|---------------------------|
| m | Mass flow rate of compressed hydrogen, kg/s |

(continued)

| | |
|---|---|
| t | Time counted for HRS, m/s |
| $\rho$ | Gas density, kg/m$^3$ |
| ba | Break away |
| inlet | Inlet of vehicle tank |
| line | Hydrogen fueling line |
| max | Maximum value |
| new | New parameter to continue simulation |
| Cv | Specific heat capacity at constant volume, kJ/kg·K |
| hs | Stagnation enthalpy, kJ/kg |
| N | Number of tanks |
| K | Pressure drop coefficient of fueling line, m$^{-4}$ |
| k | Number of prr calculations |
| d | Diameter of tank inlet tube, m |
| u | Internal energy, kJ/kg |
| tank | Vehicle tank |
| R | Universal Gas Constant(8.314472), J/mol·K |
| m | Mass of compressed hydrogen, kg |
| V | Volume, m$^3$ |
| P | Pressure, MPa |
| T | Temperature, K |
| h | Static enthalpy, kJ/kg |
| Z | Compressibility factor |
| SOC | State Of Charge, % |

Fig. 3 illustrates a process in which the dispenser controller 310 receives data from the IR receiver 260 and the hydrogen supply unit 330, calculates a new pressure ramp rate (prr$^{new}$, optimal pressure ramp rate. and provides the calculated pressure ramp rate to the hydrogen supply unit 330. To that end, the dispenser controller 310 of the dispenser 300 performs the algorithm shown in Fig. 3.

<First step>

In the first step S3100, the dispenser controller 310 may gather initial state values from the hydrogen tank 110 of the CHSS 100 and the hydrogen supply unit 330 of the dispenser 300. The initial state values may include the structural variable values of the hydrogen tank 110, the structural variable values of the data hydrogen moving device 200, the initial thermodynamic variable values of the gas supplied by the dispenser 300, and the thermodynamic variable values of the hydrogen in the hydrogen tank 110.
The structural variable values of the hydrogen tank 110 may include the number ($N_{tank}$) of the hydrogen tanks 110, the inner diameter ($d_{inlet}$) of the inlet of the hydrogen tank 110, and the volume ($V_{tank}$) of the hydrogen tank 110. In this case, it is hypothesized that all of the hydrogen tanks 110 included in one CHSS 100 have the same structural variables. For example, it is assumed that the number of the hydrogen tanks 110 in the CHSS 100 and the inner diameter and volume thereof each have the same standard value. These values are received by the dispenser controller 310 via the IR receiver 260 and, since these values are unique values of the CHSS 200, these values may be received only once before hydrogen fueling begins.
The structural variable values of the data hydrogen moving device 200 may include the pressure loss coefficient ($K_{line}$) of the data hydrogen moving device 200 which is measured by the hydrogen supply unit 330. Since the pressure loss coefficient is also a unique value of the data hydrogen moving device 200 which is also referred to as a fueling line or hydrogen fueling line, the pressure loss coefficient may also be received only one time before hydrogen fueling starts.

However, since the pressure loss coefficient ($K_{line}$) is a unique value of the data hydrogen moving device 200 but may be varied depending on the kind of the CHSS 100, the pressure loss coefficient ($K_{line}$) of the entire data hydrogen moving device 200 may also be varied depending on the kind of the CHSS 100. The pressure loss coefficient may be obtained using the pressure loss value ($\triangle P_{line}$) obtained upon leakage check on the data hydrogen moving device 200 before hydrogen fueling starts, the density ($\rho_{line}$) of hydrogen in the data hydrogen moving device 200, and Equation 1 below. Here, $\dot{m}_{line}$ is the mass flow (hydrogen flow rate).

[Equation 1]

$$\Delta P_{line} = K_{line} \frac{\dot{m}_{line}^2}{\rho_{line}}$$

The initial thermodynamic variable values of the gas supplied by the dispenser 300 may include the pressure ($P_{ba}^{t=1}$) and temperature ($T_{ba}^{t=1}$) of the hydrogen supplied by the dispenser 300. As these values, the ambient temperature measured around the dispenser 300 may be used. The thermodynamic variable values of the hydrogen in the hydrogen tank 110 may include the pressure ($P_{tank}^{t=1}$) and temperature ($T_{tank}^{t=1}$) of the hydrogen tank 110 which are gathered by the temperature sensor and pressure sensor embedded in the hydrogen tank valve 130 of the hydrogen tank 110.

The initial pressure ramp rate (prr) for calculating the new pressure ramp rate (prr^new) may be the value obtained by dividing 20MPa/min by the number of hydrogen tanks 110. A hydrogen fueling simulation is performed using the initial values of these variables to calculate the new pressure ramp rate (prr^new), and the new pressure ramp rate is applied to hydrogen fueling. Thus, the initial pressure ramp rate (prr) may be of no significance in practice. According to an embodiment, an intermediate value of the values empirically known may be adopted to save the time taken to discover a proper initial pressure ramp rate (prr).

<Second step>

In the second step S3200, the dispenser controller 310 may determine the mass flow and the temperature, pressure, and state of charge (SOC) of the hydrogen tank using a pre-stored simple thermodynamic model based on the initial state values. For example, in the second step S3200, the mass flow ($\dot{m}_{line}$), the temperature ($T_{tank}$) inside the hydrogen tank 110, the pressure ($P_{tank}$) inside the hydrogen tank 110, and the state of charge (SOC) are calculated using the simple thermodynamic model based on the initial values given in the first step S3100, and relatively larger values as compared with the resultant values of the simple thermodynamic model are selected to thereby determine the maximum mass flow ($\dot{m}_{line}^{max}$), maximum hydrogen tank temperature ($T_{tank}^{max}$), and the maximum hydrogen tank pressure ($P_{tank}^{max}$). The process of the simple thermodynamic model-based calculation is repeated while incrementing the time by $\triangle t$ and, if the state of charge (SOC) becomes 100 or more, the repeated calculation is stopped.

<Third step>

The dispenser controller 310 may calculate the differences between each of the determined mass flow, temperature, and pressure and each pre-stored safety threshold. In this case, the dispenser controller 310 may determine that the pressure ramp rate when all of the differences as a result of the repeated calculation are positive (+) values while one of the differences becomes each pre-stored set value or less. In this case, each pre-set set value may be configured based on an acceptable small value, e.g., based on the results of research. The third step S3300 may be a simulation result determining step. In the third step S3300, the dispenser controller 310 compares the maximum flow rate ($\dot{m}_{line}^{max}$), maximum hydrogen tank temperature ($T_{tank}^{max}$), and maximum hydrogen tank pressure ($P_{tank}^{max}$) with the safety thresholds (e.g., 0.06kg/s, 85°C, and 87.5MPa), respectively, thereby obtaining the differences, i.e., $\triangle \dot{m}$, $\triangle T$, and $\triangle P$, respectively. In this case, what is intended by the dispenser controller 310 is to shorten the time required for hydrogen fueling by maximizing the initial pressure ramp rate (prr) within a range in which the maximum mass flow ($\dot{m}_{line}^{max}$), maximum hydrogen tank temperature ($T_{tank}^{max}$), and maximum hydrogen tank pressure ($P_{tank}^{max}$) do not exceed the safety thresholds. If any one of the three values exceeds its corresponding safety threshold, this may end up violating relevant rules. Thus, if all of $\Delta\dot{m}$, $\triangle$T, and $\triangle$P are positive (+) values, and one of $\Delta\dot{m}$, $\triangle$T, and $\triangle$P is a preset value, e.g., a small value as acceptable (based on the results of research), the applicable pressure ramp rate (prr) may be set to, and regarded as, the optimal pressure ramp rate (prr). In this case, since the regarded optimal pressure ramp rate (prr) is not the actual optimal pressure ramp rate, the optimal pressure ramp rate (prr) is first set and then the actual pressure ramp rate is discovered and applied in the fourth step below.

<Fourth step>

The dispenser controller 310 may discover and apply the pressure ramp rate of the hydrogen supply unit 110 based on the calculated differences. In this case, the fourth step may include a discovery step S3400 and an application step S3500. In the discovery step S3400, unless all of $\Delta\dot{m}$, $\triangle$T, and $\triangle$P are positive (+) values, i.e., if any one of the values is a negative (-) value, the dispenser controller 310 reduces the pressure ramp rate (prr) and, if all of $\Delta\dot{m}$, $\triangle$T, and $\triangle$P are positive values, but one of $\Delta\dot{m}$, $\triangle$T, and $\triangle$P is not the preset value, i.e., the small value as acceptable, or less, the dispenser controller 310 increases the pressure ramp rate (prr) and repeats the second step S3200 and the third step S3300 to thereby discover the optimal pressure ramp rate (prr). In the application S3500, the dispenser controller 310 sets the optimal pressure ramp rate (prr) discovered in steps S3100 to S3400 as a new pressure ramp rate (prr$^{new}$) and transmits the new pressure ramp rate to the hydrogen supply unit 330 so that the hydrogen supply unit 330 may continue to fill the hydrogen tank 110 of the CHSS 100 at the new pressure ramp rate (prr$^{new}$).

<Fifth step>

If a preset time elapses after discovering the pressure ramp rate of the hydrogen supply unit 110 based on the calculated differences and applying the discovered pressure ramp rate, the dispenser controller 310 may recalculate a new optimal pressure ramp rate based on the temperature and pressure of the hydrogen tank 110 and the temperature and pressure of the hydrogen supply unit 330. This step may be a step S3600 for requesting to calculate a new optimal pressure ramp rate (prr$^{new}$) and may be a step for requesting to update the new pressure ramp rate (prr$^{new}$) applied in step S3500. For example, when a predetermined time, e.g., two seconds, elapses, based on the pressure ($P_{tank'}$) and temperature ($T_{tank'}$) of the new hydrogen tank 100 received from the IR receiver 260 and the hydrogen supply unit 330 and the pressure ($P_{ba'}$) and temperature ($T_{ba'}$) of the data hydrogen moving device 200, a new optimal pressure ramp rate (prr$^{new}$) may be recalculated. For example, if the pressure ramp rate is A at 0 seconds, the pressure ramp rate at two seconds may be recalculated to B and, two seconds thereafter, i.e., at four seconds, the pressure ramp rate may become C. In such a manner, the pressure ramp rate may be continuously updated to a new optimal pressure ramp rate (prr$^{new}$) (A-B-C).

According to an embodiment, the thermodynamic model used in the hydrogen fueling simulation does not reflect heat transfer in the data hydrogen moving device 200 and the hydrogen tank 110. Thus, an error may occur in the calculation of the temperature of hydrogen in the hydrogen tank 110. However, since the hydrogen fueling simulation is performed based on the pressure and temperature inside the hydrogen tank 110 in the current state, errors may reduce if the duration of the simulation is sufficiently short. Thus, the hydrogen fueling simulation may be repeated during the remaining fueling time until immediately before the hydrogen fueling is terminated.

The order of the above-described steps S3100 to S3600 is merely an example, and embodiments of the disclosure are not limited thereto. In other words, the above-described steps S3100 to S3600 may be performed in a different order, or some of the steps may be simultaneously performed or omitted.

Fig. 4 is a flowchart illustrating an operational process of a simple thermodynamic model according to an embodiment of the disclosure. In the simple thermodynamic model according to an embodiment of the disclosure, the initial values and the data received from the IR receiver 260 and the hydrogen supply unit 330 are used to calculate the mass flow ($\dot{m}_{line}^{t}$), the temperature ($T_{tank}^{t}$) of the hydrogen tank 110, the pressure ($P_{tank}^{t}$) of the hydrogen tank 110, and the state of charge (SOC), which are then compared with their immediately prior values, thereby determining the maximum mass flow ($\dot{m}_{line}^{max}$), maximum hydrogen tank temperature ($T_{tank}^{max}$), and maximum hydrogen tank pressure ($P_{tank}^{max}$). This step is a sub-step of step S3200 and, thus, the components or operations described above in connection with S3200 are not repeatedly described below. Steps S3100 to S3600 denoted the first step to the fifth step in Fig. 3 are defined as different steps from a first step S4100 to a sixth step S4600 below.

<First step>

The dispenser controller 310 may set a supplied hydrogen pressure of the dispenser 300. In the first step S4100, the pressure of hydrogen supplied from the dispenser 300 is set. The supplied hydrogen pressure of the dispenser 300 may be calculated using Equation 2 below based on the supplied hydrogen pressure ( $P_{ba}^{t-1}$ ) of the immediately prior time step (-$\triangle$t), the pressure ramp rate (prr$^k$) of the current step, and the hydrogen fueling simulation time period ($\triangle$t).

[Equation 2]

$$P_{ba}^t = P_{ba}^{t-1} + ( prr^k \times \Delta t )$$

<Second step>

The dispenser controller 310 may calculate the mass flow which is the hydrogen flow rate of the data hydrogen moving device 200 (S4200). The mass flow ( $\dot{m}_{line}^t$ ) of the data hydrogen moving device 200 may be obtained using Equation 3 based on the hydrogen density ($\rho_{line}^t$) in the data hydrogen moving device 200, the pressure ( $P_{ba}^t$ ) of the hydrogen supplied by the dispenser 300, the pressure ( $P_{tank}^t$ ) of the hydrogen tank 110, and the pressure loss coefficient ($K_{line}$) of the data hydrogen moving device 200. As the difference between the pressure at which the dispenser 300 supplies hydrogen and the pressure of the hydrogen tank 110 increases, and the pressure loss coefficient ($K_{line}$) decreases, the mass flow ( $\dot{m}_{line}^t$ ) of the data hydrogen moving device 200 tends to rise.

[Equation 3]

$$\dot{m}_{line}^t = \sqrt{\frac{\rho_{line}^t ( P_{ba}^t - P_{tank}^t )}{K_{line}}}$$

<Third step>

The dispenser controller 310 may calculate the stagnation enthalpy of the hydrogen flowing into the hydrogen tank 110. In the third step S4300, the stagnation enthalpy (hs$_{inlet}^t$) of the hydrogen flowing into the hydrogen tank 110 may be obtained using Equation 4 based on the enthalpy ( $h_{line}^t$ ) which is the function of the temperature and pressure of the hydrogen flowing into the hydrogen tank 110, the mass flow ( $\dot{m}_{line}^t$ ), the number (N$_{tank}$) of the hydrogen tanks 110 connected in parallel, the inner diameter (d$_{inlet}$) of the inlet of the hydrogen tank 110, and the density ($\rho_{line}^t$) of hydrogen inside the data hydrogen moving device 200. If the number (N$_{tank}$) of hydrogen tanks 110 connected in parallel increases, the flow velocity of the hydrogen flowing into each hydrogen tank 110 reduces and, thus, the stagnation enthalpy decreases. If the inlet inner diameter (d$_{inlet}$) of the hydrogen tank 110 reduces, the flow velocity of the hydrogen flowing into the hydrogen tank 110 increases and so does the stagnation enthalpy.

[Equation 4]

$$hs_{inlet}^t = h_{line}^t + \frac{(\dot{m}_{line}^t / N_{tank})^2}{125(\pi d_{inlet}^2 \rho_{line}^t)^2}$$

<Fourth step>

The dispenser controller 310 may calculate the temperature inside the hydrogen tank 110. In the fourth step S4400, the temperature inside the hydrogen tank 110 may be obtained using Equation 5 based on the internal energy variation ( $\Delta u_{tank}^t$ ) inside the hydrogen tank 110 and the specific heat capacity ( $Cv_{tank}^t$ ) of hydrogen inside the hydrogen tank 110. In Equation 5, the specific heat capacity ( $Cv_{tank}^t$ ), the temperature ( $T_{tank}^t$ ) of the hydrogen tank 110, and the pressure ( $P_{tank}^t$ ) of the hydrogen tank 110 need to be determined to obtain the internal temperature inside the hydrogen tank 110. However, in an embodiment of the disclosure, from an order of calculation standpoint, it may be required to, before calculating the temperature ( $T_{tank}^t$ ) of the hydrogen tank 110 and the pressure ( $P_{tank}^t$ ) of the hydrogen tank 110, calculate the specific heat capacity ( $Cv_{tank}^t$ ). Thus, the calculation is performed by applying, instead of the temperature ( $T_{tank}^t$ ) of the hydrogen tank 110 and the pressure ( $P_{tank}^t$ ) of the hydrogen tank 110, the temperature ( $T_{tank}^{t-1}$ ) of the hydrogen tank 110 and the pressure ( $P_{tank}^{t-1}$ ) of the hydrogen tank 110. Resultantly, although the resultant temperature ( $T_{tank}^t$ ) of the hydrogen tank 110 is higher than the actual value, since it results it conservative results, there is no safety issue.

[Equation 5]

$$T_{tank}^t = \frac{\Delta u_{tank}^t + Cv_{tank}^{t-1} T_{tank}^{t-1} m_{tank}^{t-1}}{Cv_{tank}^t m_{tank}^t}$$

<Fifth step>

The dispenser controller 310 may calculate the state of charge (SOC) corresponding to the pressure inside the hydrogen tank 110 and the degree at which the hydrogen tank 110 is filled with hydrogen (S4500). To increase the storage efficiency, hydrogen is compressed at a few tens of MPa, and it may be impossible to apply the ideal gas equation to high-pressure compressed hydrogen. To obtain the pressure ( $P_{tank}^t$ ) of the hydrogen tank 110, the compressibility factor of hydrogen needs to be known. To precisely calculate the pressure of hydrogen whose temperature tends to rise due to the Joule-Thomson effect upon adiabatic expansion, the compressibility factor needs to be calculated using a state equation reflecting such tendency. Equations 6 to 8 are used which are special hydrogen state equations developed according to an embodiment of the disclosure. According to Equations 6 to 8, the pressure ( $P_{tank}^t$ ) and state of charge (SOC) of the hydrogen tank 110 may be obtained. Here, R is the universal gas constant which is defined in Table 1.

[Equation 6]

$$Z_{tank}^t = 1 + \sum_{j=1}^{9} 100\, a_j\, (T_{tank}^t)^{-b_j} (P_{tank}^t)^{c_j}$$

[Equation 7]

$$P_{tank}^t = Z_{tank}^t \rho_{tank}^t R T_{tank}^t$$

[Equation 8]

$$SOC = \frac{100 \rho_{tank}^t}{40.2}$$

<Sixth step>

The dispenser controller 310 may determine the maximum mass flow corresponding to the maximum hydrogen flow rate of the data hydrogen moving device 200 and the maximum pressure and maximum temperature of the hydrogen tank 110. The mass flow ( $\dot{m}_{line}^t$ ) of the data hydrogen moving device 200, the pressure ( $P_{tank}^t$ ) of the hydrogen tank 110, and the temperature ( $T_{tank}^t$ ) of the hydrogen tank 110, which have been calculated in the above steps are compared with their respective immediately prior maximum values, determining the maximum mass flow ( $\dot{m}_{line}^{max}$ ), the maximum hydrogen tank temperature ( $T_{tank}^{max}$ ), and the maximum hydrogen tank pressure ( $P_{tank}^{max}$ ). According to hydrogen fueling safety standards, regulations require that the safety thresholds be not exceeded during hydrogen fueling, as well as at the time of termination of hydrogen fueling. Thus, according to an embodiment of the disclosure, the maximum mass flow ( $\dot{m}_{line}^{max}$ ), the maximum hydrogen tank temperature ( $T_{tank}^{max}$ ), and the maximum hydrogen tank pressure ( $P_{tank}^{max}$ ) are set as variables to be controlled.

The order of the above-described steps S4100 to S4600 is merely an example, and embodiments of the disclosure are not limited thereto. In other words, the above-described steps S4100 to S4600 may be performed in a different order, or some of the steps may be simultaneously performed or omitted.

What is not described regarding the hydrogen fueling method based on real-time communication of a CHSS for fuel cells in connection with Figs. 3 and 4 is the same or easily inferred from what has been described regarding the hydrogen fueling method based on real-time communication of a CHSS for fuel cells in connection with Figs. 1 and 2, and no detailed description thereof is thus presented.

The hydrogen fueling method based on real-time communication of a CHSS for fuel cells according to an embodiment described with reference to Figs. 3 and 4 may be implemented in the form of a recording medium or computer-readable medium containing computer-executable instructions or commands, such as an application or program module executable on a computer. The computer-readable medium may be an available medium that is accessible by a computer. The computer-readable storage medium may include a volatile medium, a non-volatile medium, a separable medium, and/or an inseparable medium. The computer-readable medium may include a computer storage medium. The computer storage medium may include a volatile medium, a non-volatile medium, a separable medium, and/or an inseparable medium that is implemented in any method or scheme to store computer-readable commands, data architecture, program modules, or other data or information.

**Claims**

1. A hydrogen fueling method performed by a dispenser (300), comprising:

   obtaining initial state values from a hydrogen supply unit (330) of the dispenser (300) and at least one hydrogen tank (110) of a compressed hydrogen storage system, CHSS (100);
   calculating (S4000) a mass flow, a temperature of the hydrogen tank (110) and a pressure of the hydrogen tank (110), and a state of charge, SOC, using a pre-stored thermodynamic model based on the initial state values;
   obtaining each difference, if the calculated SOC is equal to or more than a preset SOC (S3300), wherein the each difference comprises:

      a first difference between the calculated mass flow and a prestored first safety threshold,
      a second difference between the calculated temperature of the hydrogen tank (110) and a prestored second safety threshold, and
      a third difference between the calculated pressure of the hydrogen tank (110) and a prestored third safety threshold;
      determining (53400, S3500), based on the each difference, whether to reduce, increase, or maintain a pressure ramp rate applied when the mass flow, the temperature and the pressure is calculated,
      wherein the hydrogen fueling method further comprises:
      when a preset time elapses, repeating steps of the calculating (S4000), the obtaining and the determining (S3400, S3500).

2. The hydrogen fueling method according to claim 1, further comprising:
   if the calculated SOC is less than the preset SOC (S3200), re-calculating (S4000) the calculated mass flow, the calculated temperature of the hydrogen tank (110), the calculated pressure of the hydrogen tank (110) and the calculated SOC using the prestored thermodynamic model.

3. The hydrogen fueling method according to any one of claims 1 and 2, wherein the preset SOC is 100.

4. The hydrogen fueling method according to any one of claims 1 to 3,

   wherein the initial state values include a structural variable value of the hydrogen tank (110), a structural variable value of the data hydrogen moving device (200), an initial thermodynamic variable value of a gas supplied by the dispenser (300), and a thermodynamic variable value of hydrogen inside the hydrogen tank (110),
   wherein the structural variable value of the hydrogen tank (110) includes at least one of the number of the at least one hydrogen tank (110), an inlet diameter of the hydrogen tank (110), and a volume of the hydrogen tank (110), wherein the structural variable value of the data hydrogen moving device (200) includes a pressure loss coefficient of the data hydrogen moving device (200) measured by the hydrogen supply unit (330),

wherein the initial thermodynamic variable value of the gas supplied by the dispenser (300) includes a pressure and temperature of hydrogen supplied by the dispenser (300), and

wherein the thermodynamic variable value of hydrogen inside the hydrogen tank (110) includes a pressure and temperature of the hydrogen tank (110) obtained by a temperature sensor and a pressure sensor embedded in the hydrogen tank valve (130).

5. The hydrogen fueling method according to any one of claims 1, 3 and 4, further comprising:

if one of the each difference is a negative value, reducing (S3400) the pressure ramp rate applied when the mass flow, the temperature and pressure is calculated;

re-calculating (S4000) the calculated mass flow, the calculated temperature of the hydrogen tank (110), the calculated pressure of the hydrogen tank (110) and the calculated SOC,

wherein the first difference is obtained by subtracting the calculated mass flow from a prestored first safety threshold, the second difference is obtained by subtracting the calculated temperature of the hydrogen tank from a prestored second safety threshold, and the third difference is obtained by subtracting the calculated pressure of the hydrogen tank from a prestored third safety threshold.

6. The hydrogen fueling method according to any one of claims 1 to 5, wherein the pre-stored thermodynamic model is executed while performing:

setting (S4100) a supplied hydrogen pressure of the dispenser (300);

calculating (S4200) a mass flow which is a hydrogen flow rate of the data hydrogen moving device (200);

calculating (S4300) a stagnation enthalpy of hydrogen flowing into the hydrogen tank (110);

calculating (S4400) a temperature inside the hydrogen tank (110);

calculating (S4500) a state of charge, SOC, corresponding to a pressure inside the hydrogen tank (110) and a temperature at which the hydrogen tank (110) is filled with hydrogen; and

based on comparison with a previous mass flow, a previous pressure of the hydrogen tank (110) and a previous temperature of the hydrogen tank (110), determining (S4600) a maximum mass flow, a maximum pressure of the hydrogen tank (110) and a maximum temperature of the hydrogen tank (110),

wherein the maximum mass flow, the maximum temperature of the hydrogen tank (110) and the maximum pressure of the hydrogen tank (110) each corresponds to the determined mass flow, the determined temperature of the hydrogen tank (110) and the determined pressure of the hydrogen tank (110).

7. The hydrogen fueling method according to any one of claims 1 and 3 to 6, further comprising:

if all of the each difference are positive values and any one of the each difference is a preset value or less, setting, a pressure ramp rate applied when the mass flow, the temperature and pressure is calculated, as a new pressure ramp rate,

wherein the first difference is calculated by subtracting the calculated mass flow from a prestored first safety threshold, the second difference is calculated by subtracting the calculated temperature of the hydrogen tank from a prestored second safety threshold, and the third difference is calculated by subtracting the calculated pressure of the hydrogen tank from a prestored third safety threshold.

8. The hydrogen fueling method according to any one of claims 1 and 3 to 7, further comprising:

if all of each difference are positive values and if it is not that any one of the each difference is a preset value or less, determining (S3400) a new pressure ramp rate by increasing the pressure ramp rate applied when the mass flow, the temperature and pressure is the determined,

wherein the first difference is calculated by subtracting the calculated mass flow from a prestored first safety threshold, the second difference is calculated by subtracting the calculated temperature of the hydrogen tank from a prestored second safety threshold, and the third difference is calculated by subtracting the calculated pressure of the hydrogen tank from a prestored third safety threshold.

9. A dispenser (300) comprising means for implementing the method as claimed in any one of the foregoing claims.

**Patentansprüche**

1. Wasserstoffbetankungsverfahren, das von einer Zapfsäule (300) durchgeführt wird, umfassend:

   Erhalten von Anfangszustandswerten von einer Wasserstoffversorgungseinheit (330) der Zapfsäule (300) und zumindest einem Wasserstofftank (110) eines Druckwasserstoffspeichersystems, CHSS, (100);
   Berechnen (S4000) eines Massenflusses, einer Temperatur des Wasserstofftanks (110) und eines Drucks des Wasserstofftanks (110) und eines Ladezustands, SOC, unter Verwendung eines vorab gespeicherten thermodynamischen Modells basierend auf den Anfangszustandswerten;
   Ermitteln jeder Differenz, wenn der berechnete SOC gleich oder größer als ein voreingestellter SOC ist (S3300), wobei jede Differenz umfasst:

   eine erste Differenz zwischen dem berechneten Massenfluss und einem vorab gespeicherten ersten Sicherheitsschwellenwert,
   eine zweite Differenz zwischen der berechneten Temperatur des Wasserstofftanks (110) und einem vorab gespeicherten zweiten Sicherheitsschwellenwert, und
   eine dritte Differenz zwischen dem berechneten Druck des Wasserstofftanks (110) und einem vorab gespeicherten dritten Sicherheitsschwellenwert;
   Bestimmen (S3400, S3500), basierend auf jeder Differenz, ob eine Druckanstiegsrate, die angewendet wird, wenn der Massenfluss, die Temperatur und der Druck berechnet werden, verringert, erhöht oder beibehalten werden soll,
   wobei das Wasserstoffbetankungsverfahren weiterhin umfasst:
   wenn eine voreingestellte Zeit verstrichen ist, Wiederholen der Schritte des Berechnens (S4000), des Erhaltens und des Bestimmens (S3400, S3500).

2. Wasserstoffbetankungsverfahren nach Anspruch 1, weiterhin umfassend:
   wenn der berechnete SOC kleiner als der voreingestellte SOC ist (S3200), erneutes Berechnen (S4000) des berechneten Massenflusses, der berechneten Temperatur des Wasserstofftanks (110), des berechneten Drucks des Wasserstofftanks (110) und des berechneten SOC unter Verwendung des vorab gespeicherten thermodynamischen Modells.

3. Wasserstoffbetankungsverfahren nach einem der Ansprüche 1 und 2, wobei der voreingestellte SOC 100 ist.

4. Wasserstoffbetankungsverfahren nach einem der Ansprüche 1 bis 3,

   wobei die Anfangszustandswerte einen Strukturvariablenwert des Wasserstofftanks (110), einen Strukturvariablenwert der Daten-Wasserstoffbewegungsvorrichtung (200), einen anfänglichen thermodynamischen Variablenwert eines von der Zapfsäule (300) gelieferten Gases und einen thermodynamischen Variablenwert von Wasserstoff innerhalb des Wasserstofftanks (110) umfassen,
   wobei der strukturelle Variablenwert des Wasserstofftanks (110) zumindest eine von einer Anzahl des zumindest einen Wasserstofftanks (110), einem Einlassdurchmesser des Wasserstofftanks (110) und einem Volumen des Wasserstofftanks (110) umfasst,
   wobei der Strukturvariablenwert der Daten-Wasserstoffbewegungsvorrichtung (200) einen Druckverlustkoeffizienten der Daten-Wasserstoffbewegungsvorrichtung (200) umfasst, der von der Wasserstoffversorgungseinheit (330) gemessen wird,
   wobei der anfängliche thermodynamische Variablenwert des von der Zapfsäule (300) gelieferten Gases einen Druck und eine Temperatur des von der Zapfsäule (300) gelieferten Wasserstoffs umfasst und
   wobei der thermodynamische Variablenwert des Wasserstoffs innerhalb des Wasserstofftanks (110) einen Druck und eine Temperatur des Wasserstofftanks (110) umfasst, die durch einen Temperatursensor und einen Drucksensor ermittelt werden, die im Wasserstofftankventil (130) eingebettet sind.

5. Wasserstoffbetankungsverfahren nach einem der Ansprüche 1, 3 und 4, weiterhin umfassend:

   wenn eine der Differenzen ein negativer Wert ist, Verringern (S3400) der Druckanstiegsrate, die angewendet wird, wenn der Massenfluss, die Temperatur und der Druck berechnet werden;
   erneutes Berechnen (S4000) des berechneten Massenflusses, der berechneten Temperatur des Wasserstofftanks (110), des berechneten Drucks des Wasserstofftanks (110) und des berechneten SOC,
   wobei die erste Differenz durch Subtrahieren des berechneten Massenflusses von einem vorab gespeicherten ersten Sicherheitsschwellenwert erhalten wird, die zweite Differenz durch Subtrahieren der berechneten Temperatur des Wasserstofftanks von einem vorab gespeicherten zweiten Sicherheitsschwellenwert erhalten wird und die dritte Differenz durch Subtrahieren des berechneten Drucks des Wasserstofftanks von einem vorab gespeicherten dritten Sicherheitsschwellenwert erhalten wird.

6. Wasserstoffbetankungsverfahren nach einem der Ansprüche 1 bis 5, wobei das vorab gespeicherte thermodynamische Modell ausgeführt wird, während Folgendes durchgeführt wird:

Einstellen (S4100) eines zugeführten Wasserstoffdrucks der Zapfsäule (300);
Berechnen (S4200) eines Massenflusses, der eine Wasserstoffdurchflussrate der Daten-Wasserstoffbewegungsvorrichtung (200) ist;
Berechnen (S4300) einer Stagnationsenthalpie von Wasserstoff, der in den Wasserstofftank (110) fließt;
Berechnen (S4400) einer Temperatur innerhalb des Wasserstofftanks (110);
Berechnen (S4500) eines Ladezustands, SOC, der einem Druck innerhalb des Wasserstofftanks (110) und einer Temperatur entspricht, bei der der Wasserstofftank (110) mit Wasserstoff gefüllt wird; und
basierend auf einem Vergleich mit einem vorherigen Massenfluss, einem vorherigen Druck des Wasserstofftanks (110) und einer vorherigen Temperatur des Wasserstofftanks (110), Bestimmen (S4600) eines maximalen Massenflusses, eines maximalen Drucks des Wasserstofftanks (110) und einer maximalen Temperatur des Wasserstofftanks (110),
wobei der maximale Massenfluss, die maximale Temperatur des Wasserstofftanks (110) und der maximale Druck des Wasserstofftanks (110) jeweils dem ermittelten Massenfluss, der ermittelten Temperatur des Wasserstofftanks (110) und dem ermittelten Druck des Wasserstofftanks (110) entsprechen.

7. Wasserstoffbetankungsverfahren nach einem der Ansprüche 1 und 3 bis 6, das weiterhin umfasst:

wenn alle Differenzen positive Werte sind und eine der Differenzen einen voreingestellten Wert oder weniger hat, Festlegen einer Druckanstiegsrate, die angewendet wird, wenn der Massenfluss, die Temperatur und der Druck berechnet werden, als eine neue Druckanstiegsrate,
wobei die erste Differenz durch Subtrahieren des berechneten Massenflusses von einem vorab gespeicherten ersten Sicherheitsschwellenwert berechnet wird, die zweite Differenz durch Subtrahieren der berechneten Temperatur des Wasserstofftanks von einem vorab gespeicherten zweiten Sicherheitsschwellenwert berechnet wird und die dritte Differenz durch Subtrahieren des berechneten Drucks des Wasserstofftanks von einem vorab gespeicherten dritten Sicherheitsschwellenwert berechnet wird.

8. Wasserstoffbetankungsverfahren nach einem der Ansprüche 1 und 3 bis 7, weiterhin umfassend:

wenn alle Differenzen positive Werte sind und keine der Differenzen einen voreingestellten Wert oder weniger hat, Bestimmen (S3400) einer neuen Druckanstiegsrate durch Erhöhen der Druckanstiegsrate, die angewendet wird, wenn der Massenfluss, die Temperatur und der Druck bestimmt werden,
wobei die erste Differenz durch Subtrahieren des berechneten Massenflusses von einem vorab gespeicherten ersten Sicherheitsschwellenwert berechnet wird, die zweite Differenz durch Subtrahieren der berechneten Temperatur des Wasserstofftanks von einem vorab gespeicherten zweiten Sicherheitsschwellenwert berechnet wird und die dritte Differenz durch Subtrahieren des berechneten Drucks des Wasserstofftanks von einem vorab gespeicherten dritten Sicherheitsschwellenwert berechnet wird.

9. Zapfsäule (300) mit Mitteln zur Durchführung des Verfahrens nach einem der vorhergehenden Ansprüche.

## Revendications

1. Procédé de ravitaillement d'hydrogène exécuté par un distributeur (300), comprenant :

l'obtention de valeurs d'état initial d'une unité d'alimentation en hydrogène (330) du distributeur (300) et d'au moins un réservoir d'hydrogène (110) d'un système de stockage d'hydrogène comprimé, CHSS (100);
le calcul (S4000) d'un débit massique, d'une température du réservoir d'hydrogène (110) et d'une pression du réservoir d'hydrogène (110), ainsi que d'un état de charge, SOC, à l'aide d'un modèle thermodynamique stocké au préalable basé sur les valeurs d'état initial;
l'obtention de chaque différence, si le SOC calculé est supérieur ou égal à un SOC prédéfini (S3300), dans lequel chaque différence comprend:

une première différence entre le débit massique calculé et un premier seuil de sécurité stocké au préalable,
une deuxième différence entre la température calculée du réservoir d'hydrogène (110) et un deuxième seuil de sécurité stocké au préalable, et
une troisième différence entre la pression calculée du réservoir d'hydrogène (110) et un troisième seuil de sécurité stocké au préalable;
la détermination (S3400, S3500), en fonction de chaque différence, s'il faut réduire, augmenter ou maintenir une vitesse de rampe de pression appliqué lorsque le débit massique, la température et la pression sont calculés,
dans lequel le procédé d'avitaillement d'hydrogène comprend en outre:
à l'expiration d'un délai prédéfini, la répétition des étapes de calcul (S4000), d'obtention et de détermination (S3400, S3500).

2. Procédé de ravitaillement d'hydrogène selon la revendication 1, comprenant en outre:
si le SOC calculé est inférieur au SOC prédéfini (S3200), le recalcul (S4000) du débit massique calculé, de la température calculée du réservoir d'hydrogène (110), de la pression calculée du réservoir d'hydrogène (110) et du SOC calculé à l'aide du modèle thermodynamique prédéfini.

3. Procédé de ravitaillement d'hydrogène selon l'une quelconque des revendications 1 et 2, dans lequel le SOC prédéfini est 100.

4. Procédé de ravitaillement d'hydrogène selon l'une quelconque des revendications 1 à 3,

dans lequel les valeurs d'état initial comprennent une valeur variable structurelle du réservoir d'hydrogène (110), une valeur de la variable structurelle du dispositif de déplacement de l'hydrogène (200), une valeur variable thermodynamique initiale d'un gaz fourni par le distributeur (300) et une valeur variable thermodynamique de l'hydrogène à l'intérieur du réservoir d'hydrogène (110),
dans lequel la valeur de la variable structurelle du réservoir d'hydrogène (110) comprend au moins l'un parmi le nombre d'au moins un réservoir d'hydrogène (110), un diamètre d'entrée du réservoir d'hydrogène (110) et un volume du réservoir d'hydrogène (110),
dans lequel la valeur de la variable structurelle du dispositif de déplacement de l'hydrogène (200) comprend un coefficient de perte de pression du dispositif de déplacement de l'hydrogène (200) mesuré par l'unité d'alimentation en hydrogène (330),
dans lequel la valeur initiale de la variable thermodynamique du gaz fourni par le distributeur (300) comprend une pression et une température de l'hydrogène fourni par le distributeur (300), et
dans lequel la valeur de la variable thermodynamique de l'hydrogène à l'intérieur du réservoir d'hydrogène (110) comprend une pression et une température du réservoir d'hydrogène (110) obtenues par un capteur de température et un capteur de pression intégrés dans la vanne du réservoir d'hydrogène (130).

5. Procédé d'avitaillement d'hydrogène selon l'une quelconque des revendications 1, 3 et 4, comprenant en outre:

si l'une de chaque différence est une valeur négative, la réduction (S3400) la vitesse de rampe de pression lors du calcul du débit massique, de la température et de la pression;
le recalcul (S4000) du débit massique calculé, de la température calculée du réservoir d'hydrogène (110), de la pression calculée du réservoir d'hydrogène (110) et du SOC calculé,
dans lequel la première différence est obtenue en soustrayant le débit massique calculé d'un premier seuil de sécurité stocké au préalable, la deuxième différence est obtenue en soustrayant la température calculée du réservoir d'hydrogène d'un deuxième seuil de sécurité stocké au préalable, et la troisième différence est obtenue en soustrayant la pression calculée du réservoir d'hydrogène d'un troisième seuil de sécurité stocké au préalable.

6. Procédé de ravitaillement d'hydrogène selon l'une quelconque des revendications 1 à 5, dans lequel le modèle thermodynamique stocké au préalable est exécuté pendant:

le réglage (S4100) d'une pression d'hydrogène fournie au distributeur (300);
le calcul (S4200) d'un débit massique qui est un débit d'hydrogène du dispositif de déplacement d'hydrogène (200);
le calcul (S4300) d'une enthalpie de stagnation de l'hydrogène s'écoulant dans le réservoir d'hydrogène (110);

le calcul (S4400) d'une température à l'intérieur du réservoir d'hydrogène (110);

le calcul (S4500) d'un état de charge, SOC, correspondant à une pression à l'intérieur du réservoir d'hydrogène (110) et à une température à laquelle le réservoir d'hydrogène (110) est rempli d'hydrogène; et

sur la base d'une comparaison avec un débit massique précédent, une pression précédente du réservoir d'hydrogène (110) et une température précédente du réservoir d'hydrogène (110), la détermination (S4600) d'un débit massique maximal, d'une pression maximale du réservoir d'hydrogène (110) et d'une température maximale du réservoir d'hydrogène (110),

dans lequel le débit massique maximal, la température maximale du réservoir d'hydrogène (110) et la pression maximale du réservoir d'hydrogène (110) correspondent chacun au débit massique déterminé, à la température déterminée du réservoir d'hydrogène (110) et à la pression déterminée du réservoir d'hydrogène (110).

**7.** Procédé de ravitaillement d'hydrogène selon l'une quelconque des revendications 1, 3 à 6, comprenant en outre:

si toutes de chaque différence sont positives et que l'une d'entre elles est inférieure ou égale à une valeur prédéfinie, une vitesse de rampe de pression appliquée lorsque le débit massique, la température et la pression sont calculés, en tant que nouvelle vitesse taux de rampe de pression,

dans lequel la première différence est calculée en soustrayant le débit massique calculé d'un premier seuil de sécurité stocké au préalable, la deuxième différence est obtenue en soustrayant la température calculée du réservoir d'hydrogène d'un deuxième seuil de sécurité stocké au préalable, et la troisième différence est calculée en soustrayant la pression calculée du réservoir d'hydrogène d'un troisième seuil de sécurité stocké au préalable.

**8.** Procédé de ravitaillement d'hydrogène selon l'une quelconque des revendications 1, 3 à 7, comprenant en outre:

si toutes les différences sont positives et si aucune des différences n'est inférieure ou égale à une valeur prédéfinie, la détermination (S3400) d'une nouvelle vitesse de rampe de pression en augmentant la vitesse de rampe de pression appliquée lorsque le débit massique, la température et la pression sont déterminés,

dans lequel la première différence est calculée en soustrayant le débit massique calculé d'un premier seuil de sécurité stocké au préalable, la deuxième différence est obtenue en soustrayant la température calculée du réservoir d'hydrogène d'un deuxième seuil de sécurité stocké au préalable, et la troisième différence est calculée en soustrayant la pression calculée du réservoir d'hydrogène d'un troisième seuil de sécurité stocké au préalable.

**9.** Distributeur (300) comprenant un moyen pour mettre en œuvre le procédé selon l'une quelconque des revendications précédentes.

Fig. 1

Fig. 2

Fig. 3

310

START

$prr^{k=1}$ — S3100

$t = 1$

$t = t + 1$

CALCULATE $\dot{m}_{line}^{max}$, $T_{tank}^{max}$, $P_{tank}^{max}$ AND SOC BY SIMPLE THERMODYNAMIC MODEL — S4000

SOC < 100

S3200 YES

S3300 NO

$0.06 - \dot{m}_{line}^{max} = \Delta\dot{m}$
$85 - T_{tank}^{max} = \Delta T$
$87.5 - P_{tank}^{max} = \Delta P$

A

DECREASE prr — NO S3400

B

INCREASE prr — NO S3400

YES S3300

YES S3300

$k = k + 1$

$prr^{new} = prr^{k}$ — S3500 YES

$prr^{new}$

$prr^{k=1} = prr^{new}$

PREDETERMINED TIME ELAPSE AFTER TRANSMISSION OF $prr^{new}$ ? — S3600 YES / NO

PERIODICALLY REPEAT UNTIL FUELING ENDS

$K_{line}$, $P_{ba}^{t=1}$, $T_{ba}^{t=1}$

$N_{tank}$, $d_{inlet}$, $V_{tank}$, $P_{tank}^{t=1}$, $T_{tank}^{t=1}$

$P_{tank}$, $T_{tank}$

$P_{ba}$, $T_{ba}$

ONCE AT THE FIRST

ONCE AT THE FIRST

IR RECEIVER — 260

HYDROGEN SUPPLY UNIT — 330

A = ALL OF $\Delta\dot{m}$, $\Delta T$, $\Delta P$ ARE POSITIVE VALUES?
B = ONE OF $\Delta\dot{m}$, $\Delta T$, $\Delta P$ IS PRESET VALUE OR LESS?

Fig. 4

S4000

SIMPLE THERMODYNAMIC MODEL

S4100

$$\rho_{line}^t = f(P_{tank}^t, T_{ba}^t)$$
$$P_{ba}^t = P_{ba}^{t-1} + prr^k \times \Delta t$$

S4200

$$\dot{m}_{line}^t = \sqrt{\frac{\rho_{line}^t (P_{ba}^t - P_{tank}^t)}{K_{line}}}$$

S4300

$$h_{line}^t = f(P_{tank}^t, T_{ba}^t)$$
$$hs_{inlet}^t = h_{line}^t + \frac{(\dot{m}_{line}^t / N_{tank})^2}{125(\pi d_{inlet}^2 \rho_{line}^t)^2}$$

S4400

$$m_{tank}^t = m_{tank}^{t=0} + \int_0^t \dot{m}_{line}^t \, dt$$
$$Cv_{inlet}^t = f(P_{tank}^t, T_{tank}^t)$$
$$u_{tank}^t = \frac{h_{inlet}^t \dot{m}_{line}^t \Delta t / N_{tank} + u_{tank}^{t-1} m_{tank}^{t-1}}{m_{tank}^t}$$
$$T_{tank}^t = \frac{\Delta u_{tank}^t + Cv_{tank}^{t-1} T_{tank}^{t-1} m_{tank}^{t-1}}{Cv_{tank}^t m_{tank}^t}$$

S4500

$$z_{tank}^t = 1 + \sum_{j=1}^9 100 a_j (T_{tank}^t)^{b_j} (P_{tank}^t)^{c_j}$$
$$P_{tank}^t = Z_{tank}^t \rho_{tank}^t R T_{tank}^t$$
$$SOC = 100 \rho_{tank}^t / 40.2$$

S4600

COMPARE $\dot{m}_{line}^t$, $T_{tank}^t$, $P_{tank}^t$ WITH THEIR IMMEDIATELY PRIOR MAXIMUM VALUES AND DETERMINE $\dot{m}_{line}^{max}$, $T_{tank}^{max}$, $P_{tank}^{max}$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140311622
- KR 20130061268
- US 2018356270 A1